# EUROPEAN PATENT APPLICATION

(11) **EP 3 531 591 A1**
(43) Date of publication of application: **28.08.2019**
(21) Application number: 16920504.4
(22) Date of filing: 04.11.2016
(51) Int. Cl.: H04L 1/00

(54) **DATA TRANSMISSION METHOD AND APPARATUS**

(71) Applicant: Huawei Technologies Co., Ltd., Longgang Shenzhen, Guangdong 518129 (CN)
(72) Inventor: LI, Chao, Shenzhen Guangdong 518129 (CN); ZHANG, Xingwei, Shenzhen Guangdong 518129 (CN); FENG, Shulan, Shenzhen Guangdong 518129 (CN)
(74) Representative: Isarpatent
(86) International application number: PCT/CN2016/104759
(87) International publication number: WO 2018/082056

(57) **Abstract**

This application relates to the field of data transmission technologies, and in particular, to a data transmission method and apparatus. The data transmission method includes: obtaining, by user equipment, a first parameter; determining a second parameter based on the first parameter, where the second parameter includes a channel coding scheme and/or a transmission waveform; and transmitting data by using the second parameter. The solutions of embodiments of the present invention provide a communication manner in which channel coding, a transmission waveform, or both are determined based on a parameter in a communications system, to adapt to a data transmission requirement in the communications system.

## Description

### TECHNICAL FIELD

This application relates to the field of data transmission technologies, and in particular, to a data transmission method and apparatus.

### BACKGROUND

In a wireless communications system, usually, channel coding is performed on data transmitted on an uplink/downlink or sidelink channel, to provide protection to avoid an error, in received data, caused by a wireless transmission error. A channel coding scheme used in a current communications system is usually fixed. For example, a turbo code is constantly used for a data channel in a Long Term Evolution (Long Term Evolution, LTE) system.

Further, in the wireless communications system, usually, a specific transmission waveform is determined for the data transmitted on the uplink/downlink or sidelink channel, and different transmission waveforms usually have different transmission characteristics. A transmission waveform used in the current communications system is usually fixed. For example, in the LTE system, a discrete Fourier transform-spread-orthogonal frequency division multiplexing (Discrete Fourier Transform-Spread-Orthogonal Frequency Division Multiplexing, DFT-S-OFDM) waveform is constantly used for transmission on an uplink data channel, and an OFDM waveform is constantly used for transmission on a downlink data channel.

To meet a communication requirement in 2020, currently, the 3rd Generation Partnership Project (3rd Generation Partnership Project, 3GPP) is studying design of a 5G system. In a process of discussing the 5G system, one core problem is how to determine a channel coding scheme used during transmission and a data transmission waveform. Currently, the 3GPP has a plurality of candidate channel coding schemes and a plurality of candidate transmission waveforms. The channel coding schemes have respective advantages and disadvantages. If a fixed channel coding scheme and a fixed transmission waveform are still designed for a communications system, an actual requirement of a future communications system can hardly be met.

### SUMMARY

This application provides a data transmission method and apparatus. The method provides a communication manner in which channel coding, a transmission waveform, or both are determined based on a parameter in a communications system, to adapt to a data transmission requirement in the communications system.

According to a first aspect, an embodiment of the present invention provides a data transmission method, including:
obtaining, by user equipment, a first parameter;
determining a second parameter based on the first parameter, where the second parameter includes a channel coding scheme and/or a transmission waveform; and
transmitting data by using the second parameter.

In this implementation, the first parameter is associated with different channel coding schemes and/or transmission waveforms. Therefore, a channel coding scheme used during transmission of the data, a transmission waveform used by the UE, or both can be indicated. In addition, a corresponding channel coding scheme, a transmission waveform, or both can be associated with application scenarios and used based on the application scenarios in which different channel coding schemes and/or transmission waveforms have respective advantages, to optimize performance of a communications system.

In a possible design, the channel coding scheme includes:
a low-density check code; and
a channel coding scheme other than the low-density check code.

In a possible design, the transmission waveform includes one of the following:
an orthogonal frequency division multiplexing OFDM waveform; and
a discrete Fourier transform DFT-spread-orthogonal frequency division multiplexing OFDM waveform.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, the determining a second parameter based on the first parameter includes:
determining a specific scheme of the channel coding in the second parameter and/or a specific scheme of the transmission waveform in the second parameter based on a value of the first parameter or a status of the first parameter, where
the value of the first parameter or the status of the first parameter is associated with one or more specific schemes of the channel coding and/or specific schemes of the transmission waveform.

In a possible design, the determining a second parameter based on the first parameter includes: determining a size of a transmitted data packet based on the scheduling information of the data, where the scheduling information of the data includes at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

In a possible design, the scheduling information of transmission of the data is an MCS configuration of the data; and
the determining a second parameter based on the first parameter includes:
when the MSC configuration indicates a type or an index of an MCS table used during transmission of the data, determining, by the user equipment, the channel coding scheme in the second parameter based on the type or the index value of the MCS table; or
when the MSC configuration indicates an MCS value used during transmission of the data, determining, by the user equipment, the channel coding scheme in the second parameter based on the MCS value and a predefined MCS table.

In a possible design, the determining a second parameter based on the first parameter includes:
when the first parameter indicates that the user equipment detects only common control information or control information of persistent scheduling, or when the first parameter is signal quality of a link, and the signal quality of the link indicates that the user equipment is in a particular handover period or handover event, determining, by the user equipment, the second parameter in a predefined manner.

In a possible design, the determining a second parameter based on the first parameter includes:
when the first parameter indicates that the user equipment transmits the data in a grant free manner, determining, by the user equipment, the second parameter based on at least one of the following parameters:
a size of a data packet;
a channel state value;
a resource used during transmission of the data in the grant free manner; and
a default or predefined manner.

In a possible design, before the obtaining, by user equipment, a first parameter, the method further includes:
sending, by the user equipment, request information used to obtain the first parameter, where the request information includes explicit request information of the first parameter and/or implicit request information of the first parameter.

In a possible design, the sending, by the user equipment, request information used to obtain the first parameter includes:
when a transmission parameter of the user equipment changes, sending, by the user equipment, the request information used to obtain the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

According to a second aspect, an embodiment of the present invention provides a data transmission method, including:
sending, by a first transmission node, a first parameter to user equipment, so that the user equipment determines a second parameter based on the first parameter, where the second parameter includes a channel coding scheme and/or a transmission waveform; and
receiving, by the first transmission node, data that is transmitted by the user equipment based on the second parameter.

In this implementation, the first parameter is associated with different channel coding schemes and/or transmission waveforms. Therefore, a channel coding scheme used during transmission of the data, a transmission waveform used by the UE during transmission of the data, or both can be indicated. In addition, a corresponding channel coding scheme, a transmission waveform, or both can be associated with application scenarios and used based on the application scenarios in which different channel coding schemes and/or transmission waveforms have respective advantages, to optimize performance of a communications system.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data includes at least one of the following:
a modulation and coding scheme MCS value of the data; and
a time-frequency resource used for transmission of the data.

In a possible design, the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

In a possible design, when the first parameter is common control information or control information of persistent scheduling, or when the first parameter is signal quality of a link, and the signal quality of the link indicates that the user equipment is in a particular handover period or handover event, the first parameter indicates a predefined coding method.

In a possible design, when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

In a possible design, before the sending, by a first transmission node, a first parameter to user equipment, the method further includes:
receiving, by the first transmission node, request information that is used to obtain the first parameter and that is sent by the user equipment, where the request information includes explicit request information of the first parameter and/or implicit request information of the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

In a possible design, after the receiving, by the first transmission node, request information that is used to obtain the first parameter and that is sent by the user equipment, the method further includes:
sending, by the first transmission node, response information of the first parameter to the user equipment, where the response information of the first parameter indicates a specific value of the second parameter used by the user equipment.

According to a third aspect, an embodiment of the present invention provides a data transmission apparatus. The apparatus is deployed in user equipment, and the apparatus has a function of implementing behavior of the user equipment in the data transmission method design of the first aspect. The function may be implemented by hardware, or may be implemented by hardware executing corresponding software. The hardware or software includes one or more modules corresponding to the foregoing function. The module may be software and/or hardware.

In a possible design, the data transmission apparatus includes:
an obtaining unit, configured to obtain a first parameter;
a determining unit, configured to determine a second parameter based on the first parameter, where the second parameter includes a channel coding scheme and/or a transmission waveform; and
a transmission unit, configured to transmit data by using the second parameter.

In a possible design, the channel coding scheme includes:
a low-density check code; and
a channel coding scheme other than the low-density check code.

In a possible design, the transmission waveform includes one of the following:
an orthogonal frequency division multiplexing OFDM waveform; and
a discrete Fourier transform DFT-spread-orthogonal frequency division multiplexing OFDM waveform.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, that the determining unit determines the second parameter based on the first parameter specifically includes:
determining a specific scheme of the channel coding in the second parameter and/or a specific scheme of the transmission waveform in the second parameter based on a value of the first parameter or a status of the first parameter, where
the value of the first parameter or the status of the first parameter is associated with one or more specific schemes of the channel coding and/or specific schemes of the transmission waveform.

In a possible design, that the determining unit determines the second parameter based on the first parameter specifically includes:
determining a size of a transmitted data packet based on the scheduling information of the data, where the scheduling information of the data includes at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

In a possible design, the scheduling information of transmission of the data is an MCS configuration of the data; and
that the determining unit determines the second parameter based on the first parameter specifically includes:
when the MSC configuration indicates a type or an index of an MCS table used during transmission of the data, determining the channel coding scheme in the second parameter based on the type or the index value of the MCS table; or
when the MSC configuration indicates an MCS value used during transmission of the data, determining the channel coding scheme in the second parameter based on the MCS value and a predefined MCS table.

In a possible design, that the determining unit determines the second parameter based on the first parameter specifically includes:
when the first parameter indicates that the user equipment detects only common control information or control information of persistent scheduling, or when the first parameter is signal quality of a link, and the signal quality of the link indicates that the user equipment is in a particular handover period or handover event, determining, by the determining unit, the second parameter in a predefined manner.

In a possible design, that the determining unit determines the second parameter based on the first parameter specifically includes:
when the first parameter indicates that the user equipment transmits the data in a grant free manner, determining, by the determining unit, the second parameter based on at least one of the following parameters:
a size of a data packet;
a channel state value;
a resource used during transmission of the data in the grant free manner; and
a default or predefined manner.

In a possible design, the apparatus further includes a sending unit, where
the sending unit is configured to: before the obtaining unit obtains the first parameter, send request information used to obtain the first parameter, where the request information includes explicit request information of the first parameter and/or implicit request information of the first parameter.

In a possible design, that the sending unit sends the request information used to obtain the first parameter specifically includes:
when a transmission parameter of the user equipment changes, sending, by the sending unit, the request information used to obtain the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

According to a fourth aspect, an embodiment of the present invention provides a data transmission apparatus. The apparatus is deployed in a first transmission node, and the apparatus has a function of implementing behavior of the user equipment in the data transmission method design of the second aspect. The function may be implemented by hardware, or may be implemented by hardware executing corresponding software. The hardware or software includes one or more modules corresponding to the foregoing function. The module may be software and/or hardware.

In a possible design, the data transmission apparatus includes:
a sending unit, configured to send a first parameter to user equipment, so that the user equipment determines a second parameter based on the first parameter, where the second parameter includes a channel coding scheme and/or a transmission waveform; and
a receiving unit, configured to receive data that is transmitted by the user equipment based on the second parameter.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data includes at least one of the following:
a modulation and coding scheme MCS value of the data; and
a time-frequency resource used for transmission of the data.

In a possible design, the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

In a possible design, when the first parameter is common control information or control information of persistent scheduling, or when the first parameter is signal quality of a link, and the signal quality of the link indicates that the user equipment is in a particular handover period or handover event, the first parameter indicates a predefined coding method.

In a possible design, when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

In a possible design, before the sending unit sends the first parameter to the user equipment, the receiving unit is further configured to:
receive request information that is used to obtain the first parameter and that is sent by the user equipment, where the request information includes explicit request information of the first parameter and/or implicit request information of the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

In a possible design, after the receiving unit receives the request information that is used to obtain the first parameter and that is sent by the user equipment, the sending unit is further configured to send response information of the first parameter to the user equipment, where the response information of the first parameter indicates a specific value of the second parameter used by the user equipment.

According to a fifth aspect, an embodiment of the present invention provides a data transmission apparatus, where the apparatus is deployed in user equipment and includes a processor, a memory, and a communications interface, and the processor, the memory, and the communications interface are connected by using a communications bus;
the processor is configured to read program code stored in the memory, to perform the following operations:
obtaining a first parameter;
determining a second parameter based on the first parameter, where the second parameter includes a channel coding scheme and/or a transmission waveform; and
transmitting data by using the second parameter.

In the solution of this embodiment of the present invention, the processor is further configured to perform other possible method designs in the data transmission method of the first aspect.

According to a sixth aspect, an embodiment of the present invention provides a data transmission apparatus, where the apparatus is deployed in a first transmission node, and includes:
a transmitter, configured to send a first parameter to user equipment, so that the user equipment determines a second parameter based on the first parameter, where the second parameter includes a channel coding scheme and/or a transmission waveform; and
a receiver, configured to receive data that is transmitted by the user equipment based on the second parameter.

In the solution of this embodiment of the present invention, the transmitter is further configured to perform functions of the sending step and the sending unit in the embodiments of the second aspect and the fourth aspect, and the receiver is further configured to perform functions of the receiving step and the receiving unit in the embodiments of the second aspect and the fourth aspect.

According to a fifth aspect, an embodiment of the present invention provides a computer storage medium, configured to store a computer software instruction used by the data transmission apparatus in the third aspect, where the computer software instruction includes a program designed for performing the first aspect.

According to a sixth aspect, an embodiment of the present invention provides a computer storage medium, configured to store a computer software instruction used by the data transmission apparatus in the fourth aspect, where the computer software instruction includes a program designed for performing the second aspect. The solutions of the embodiments of the present invention provide a communication manner in which channel coding, a transmission waveform, or both are determined based on a parameter in a communications system, to adapt to a data transmission requirement in the communications system.

### BRIEF DESCRIPTION OF DRAWINGS

To describe the technical solutions in this application more clearly, the following briefly describes the accompanying drawings required for describing the embodiments. Apparently, a person of ordinary skill in the art may derive other drawings from these accompanying drawings without creative efforts.
FIG. 1 is a schematic diagram of a possible application scenario according to the present invention;
FIG. 2 is a schematic diagram of another possible application scenario according to the present invention;
FIG. 3 is a flowchart of a data transmission method according to Embodiment 1 of the present invention;
FIG. 4 is a flowchart of a data transmission method according to Embodiment 2 of the present invention;
FIG. 5 is a flowchart of a data transmission method according to Embodiment 3 of the present invention;
FIG. 6 is a schematic structural diagram of a data transmission apparatus according to Embodiment 1 of the present invention;
FIG. 7 is a schematic structural diagram of a data transmission apparatus according to Embodiment 2 of the present invention;
FIG. 8 is a schematic structural diagram of a data transmission apparatus according to Embodiment 3 of the present invention; and
FIG. 9 is a schematic structural diagram of a data transmission apparatus according to Embodiment 4 of the present invention.

### DESCRIPTION OF EMBODIMENTS

A network architecture and a service scenario are described in the embodiments of the present invention to describe the technical solutions in the embodiments of the present invention more clearly, but are not intended to limit the technical solutions provided in the embodiments of the present invention. A person of ordinary skill in the art may know that as the network architecture evolves and a new service scenario emerges, the technical solutions provided in the embodiments of the present invention are also applicable to a similar technical problem.

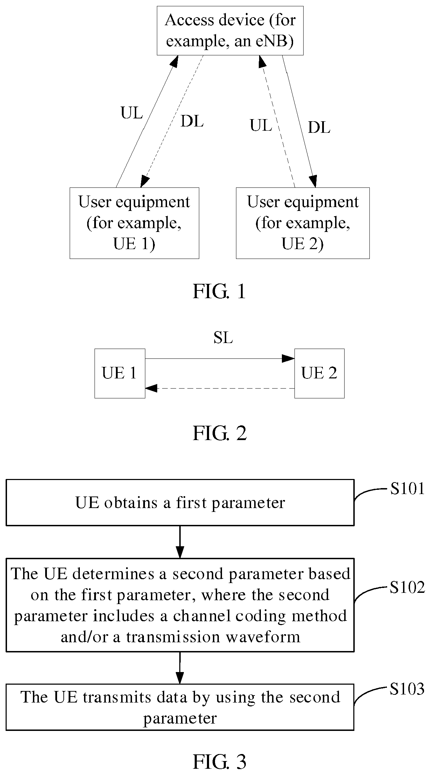

FIG. 1 is a schematic diagram of a possible application scenario according to the present invention. As shown in FIG. 1, user equipments (for example, UE 1 and UE 2) are connected to an access device (for example, an eNB), and data communication between the user equipments needs to be relayed by using the access device. A radio link on which the user equipment sends data to the access device is referred to as an uplink (English: Uplink, UL for short), and a radio link on which the access device sends data to the user equipment is referred to as a downlink (English: Downlink, DL for short).

FIG. 2 is a schematic diagram of another possible application scenario according to the present invention. As shown in FIG. 2, this scenario includes a plurality of user equipments, and data transmission and information exchange are performed between the plurality of user equipments (for example, UE 1 and UE 2) by using a device to device (device to device, D2D for short) direct technology. In the scenario shown in FIG. 2, a link on which the user equipments perform direct data communication is referred to as a sidelink (English: Sidelink, SL for short). In D2D communication, two devices in communication may be any transmission nodes or user equipments having a same type, and this is not limited in the present invention.

The user equipment in this application may include various devices having a wireless communication function, such as a handheld device, an in-vehicle device, a wearable device, and a computing device, or another processing device connected to a wireless modem, and user equipment (User equipment, UE for short), a mobile station (Mobile Station, MS for short), a terminal (Terminal), terminal equipment (Terminal Equipment), and the like in various forms. For ease of description, in this application, the devices mentioned above are collectively referred to as user equipment or UE. The access device in the present invention may be a base station, and the base station is an apparatus deployed in a radio access network to provide a wireless communication function for UE. The base station may include a macro base station, a micro base station, a relay station, an access point, and the like in various forms. In systems using different radio access technologies, names of devices having a function of the base station may be different. For example, in an LTE system, the device is referred to as an evolved NodeB (evolved NodeB, eNB or eNodeB for short), in a 3rd Generation 3G network, the device is referred to as a NodeB (NodeB), and in a 5G network, the device is referred to as a next generation NodeB or a Gbit NodeB, briefly referred to as a gNB. For ease of description, in this application, the apparatus providing a wireless communication function for UE is collectively referred to as a base station or a BS.

FIG. 3 is a flowchart of a data transmission method according to Embodiment 1 of the present invention. As shown in FIG. 3, the method includes the following processing steps:
Step S101: UE obtains a first parameter.
Step S102: The UE determines a second parameter based on the first parameter, where the second parameter includes a channel coding scheme and/or a transmission waveform.
Step SI03: The UE transmits data by using the second parameter.

The first parameter may be configured or indicated by a base station by using signaling, or may be predefined by the UE based on a communications protocol between the UE and a base station, or may be preconfigured by the UE based on a data transmission requirement.

Further, the first parameter is associated with a specific channel coding scheme and/or transmission waveform in the second parameter, and different values of the first parameter are associated with or corresponding to different channel coding schemes and/or transmission waveforms.

In step S102, that the UE determines a second parameter based on the first parameter means that when the UE obtains the specific first parameter, the UE determines a specific scheme of the channel coding and/or a specific scheme of the transmission waveform based on a value of the first parameter or a status of the first parameter. The value of the first parameter or the status of the first parameter is associated with one or more specific schemes of the channel coding and/or specific schemes of the transmission waveform. Different values of the first parameter obtained by the UE indicate different channel coding schemes and/or transmission waveforms in the determined second parameter.

In the solution of this embodiment of the present invention, the channel coding scheme may include a low-density parity check (Low-Density Parity-Check, LDPC for short) code and a channel coding scheme other than the LDPC code. The channel coding scheme other than the LDPC code may be set according to an actual requirement. For example, the channel coding scheme other than the LDPC code may be one or more of turbo coding, convolutional coding, and polar (Polar) coding. Certainly, the channel coding scheme other than the LDPC code may be another possible coding scheme.

The foregoing different coding schemes have different coding and decoding performance. For example, the LDPC code is more suitable for transmission of a large data packet; a polar code has better decoding performance and acceptable complexity in a transmission scenario of an intermediate packet and a small packet; a turbo code has a most flexible retransmission mechanism; and a convolutional code has worst decoding performance but lowest decoding complexity, that is, an implementation cost of a device is lowest. Therefore, for a system design, an optimal selection is to determine different channel coding schemes based on different scenarios, objects, or conditions.

In the solution of this embodiment of the present invention, the transmission waveform includes one of the following:
an orthogonal frequency division multiplexing (Orthogonal Frequency Division Multiple, OFDM for short) waveform; and
a discrete Fourier transform (Discrete Fourier Transform, DFT for short)-spread (Spread)-orthogonal frequency division multiplexing (DFT-S-OFDM) waveform.

OFDM herein means that a to-be-sent data modulation symbol is directly mapped onto a plurality of frequency-domain subcarriers corresponding to a particular time-domain symbol, and then N-point IFFT (Inverse Fast Fourier Transform, Inverse Fast Fourier Transform) is performed on mapped data to obtain a time-domain signal. The OFDM waveform includes a CP OFDM waveform and a CP-free OFDM waveform, or includes an OFDM waveform with a filter and an OFDM waveform without a filter.

DFT-S-OFDM is a variant of OFDM, and a difference between DFT-S-OFDM and OFDM lies in that when a transmitter processes a signal, the transmitter needs to perform DFT transformation before an OFDM operation, and then map a signal obtained after DFT transformation onto different subcarriers to generate signals in an OFDM manner.

Specifically, on each OFDM symbol, DFT-S-OFDM is: M-point DFT transformation is first performed on a to-be-sent signal to obtain a frequency-domain signal, and then the M-point frequency-domain signal obtained after the DFT transformation is mapped onto M subcarriers corresponding to N-point FFT, and N-point IFFT is performed on the mapped frequency-domain subcarriers, to obtain a time-domain signal.

It can be learned from an entire generation process of a DFT-S-OFDM signal that, an M-point frequency-domain form of a signal to be transmitted on a symbol is mapped onto an N-point frequency-domain form, unlike a generation process of a conventional OFDM signal in which a time-domain signal is directly mapped to a frequency-domain subcarrier. Therefore, a peak-to-average power ratio of a signal during transmission can be reduced. Generally, a DFT-S-OFDM waveform has a lower peak-to-average power ratio, so that the DFT-S-OFDM waveform is more suitable for transmission by a low-cost or power-limited device; or the DFT-S-OFDM waveform is more suitable for a scenario in which link quality is relatively low, or coverage is limited, or device costs of a transmitter are limited; or the DFT-S-OFDM waveform is more suitable for a high-frequency scenario (because a device in the high-frequency scenario has a higher peak-to-average power ratio). However, scheduling is more flexible by using OFDM, so that a larger frequency selective gain can be obtained. Therefore, for a system design, an optimal selection is to determine different waveform generation manners of a signal based on different scenarios, objects, or conditions.

It should be noted that a specific manner in which the first parameter is corresponding to the channel coding scheme and/or the transmission waveform included in the second parameter may be: determining a specific manner of the channel coding scheme in the second parameter or a specific scheme of the transmission waveform in the second parameter based on the first parameter; or determining a specific scheme of the channel coding scheme in the second parameter and a specific scheme of the transmission waveform in the second parameter based on the first parameter. When the specific schemes of the channel coding scheme and the transmission waveform are determined, a channel coding scheme and transmission waveform selected by the UE can be optimal, thereby improving performance of the UE and the system to a greatest extent.

In the solution of this embodiment of the present invention, the first parameter used to determine the channel coding scheme and/or the transmission waveform may include one or more of the following types.

Type 1: Information directly indicating the second parameter. For example, the UE obtains control information from a communications peer end (for example, a base station or another UE), and the control information directly indicates the channel coding scheme used by the UE and/or the transmission waveform used by the UE. Specifically, the information directly indicating the second parameter may be broadcast based on system information (English: System information, SI for short), or statically or semi-statically configured by using radio resource control (English: Radio Resource Control, RRC for short) signaling, or directly indicated by using dynamic signaling-downlink control information (English: Downlink Control Information, DCI)/uplink control information (English: Uplink Control Information, UCI for short).

Type 2: Format information of control information of the data.

In type 2, one sub-solution may be: A format of the control information is associated with different channel coding schemes and/or transmission waveforms used by the UE, that is, the first parameter may be the format of the control information. For example, there are two types of control information formats. A first type of control information format indicates that a first channel coding scheme, a first transmission waveform, or both are used, and a second type of control information format indicates that a second channel coding scheme, a second transmission waveform, or both are used.

Optionally, the control information format may be a size, a function, and the like of the control information, and control information having different sizes and/or functions is associated with different channel coding schemes and/or transmission waveforms used by the UE.

In a specific example, the control information format may be different DCI formats, and control information having different DCI formats is associated with different channel coding schemes and/or transmission waveforms used by the UE. For another example, the control information format may be different UCI formats, and control information having different UCI is associated with different channel coding schemes and/or transmission waveforms used by the UE.

In the solution of this embodiment of the present invention, using the control information format to indicate the data channel coding scheme and/or the transmission waveform used by the UE is an implicit indication manner, so that signaling overheads can be reduced. In addition, the channel coding scheme used for a data channel, the transmission waveform used by the UE, or both can be determined before the UE reads control signaling of a control channel.

Further, the sub-solution may be combined with another method for determining the second parameter in this specification, so that signaling is reduced, and multicheck can be performed on the indicated channel coding scheme and/or transmission waveform used by the UE.

In type 2, another feasible sub-solution may be: A cyclic redundancy check (English: Cyclic Redundancy Check, CRC for short) mask or a radio network temporary identity (English: Radio Network Temporary Identity, RNTI for short) value of a control channel is associated with different channel coding schemes and/or transmission waveforms used by the UE, that is, the first parameter may be the CRC mask of the control channel or the RNTI value of the control channel, and different CRC masks/RNTI values of the control channel are corresponding to different channel coding schemes and/or transmission waveforms used by the UE.

For example:
a first CRC mask or RNTI value is corresponding to a channel coding scheme A and/or a transmission waveform A used by the UE; and
a second CRC mask or RNTI value is corresponding to a channel coding scheme B and/or a transmission waveform B used by the UE.

The CRC mask of the control channel herein is a predefined value that is added to a CRC check bit of the control channel. For example, for 16-bit CRC, a corresponding 16-bit CRC check bit is generated based on actual content of the control channel according to a predefined CRC check polynomial. For example, the CRC mask may be:
a first 16-bit CRC mask 1111111111111111; and
a second 16-bit CRC mask 1111111100000000.

Different CRC masks are corresponding to different channel coding schemes and/or transmission waveforms used by the UE.

Particularly, the foregoing is merely an optional embodiment. Actually, the CRC mask may be predefined, or may be configured by the base station.

Optionally, an RNTI is also a CRC mask during use, that is, a corresponding RNTI is used as a CRC mask and is added to the control channel.

Optionally, a CRC mask may alternatively be another ID that is configured by a network and that is used to identify the UE, and this is not limited in the present invention.

Benefits are as follows: In the solution of this embodiment of the present invention, using the CRC mask or the RNTI value of the control channel to determine the channel coding scheme and/or the transmission waveform used by the UE is an implicit indication manner, so that signaling overheads can be reduced. In addition, a coding method used for a data channel can be determined before the UE reads control signaling.

Further, the sub-solution may be combined with the manner of determining the second parameter in this specification, so that signaling is reduced, and multicheck can be performed on the indicated channel coding scheme and/or transmission waveform used by the UE.

Type 3: Scheduling information of the data.

The scheduling information of the data includes one or more of the following sub-solutions.

Sub-solution 1: The scheduling information of the data is used to indicate a modulation and coding scheme (MCS) configuration of the data.

Optionally, the MCS configuration indicates a type or an index of an MCS table used during transmission of the data, so that the user equipment determines the channel coding scheme in the second parameter based on the type or the index value of the MCS table.

For example, a plurality of different MCS indication tables may be defined, and different types of MCS tables are corresponding to different channel coding schemes.

Optionally, the MCS configuration indicates an MCS value used during transmission of the data, so that the user equipment determines the channel coding scheme in the second parameter based on the MCS value and a predefined MCS table.

For example, one MCS indication table may be defined, and different parts of the MCS table are corresponding to different channel coding schemes. For example, the MCS table includes 16 rows. In the table, a part (for example, the first zeroth to seventh rows) having a relatively low bit rate uses a channel coding scheme A, and a part (for example, the first eighth to fifteenth rows) having a relatively high bit rate uses a channel coding scheme B.

Optionally, the base station may configure, indicate, or predefine an MCS threshold based on one predefined MCS indication table, and the UE compares a received MCS value with the threshold, to determine which channel coding scheme is used.

For example, an MCS indication value received by the UE is 9, and a configured MCS threshold is 7. Then, 9 is greater than 7, and a channel coding scheme B is used. For another example, an MCS indication value received by the UE is 3, and a configured MCS threshold is 6. Then, 3 is less than 6, and a channel coding scheme A is used. The threshold 7 herein is a specific example, and the corresponding MCS threshold may be predetermined, or may be configured by using signaling. This is not limited in the present invention.

In a specific implementation scenario, in theoretical and actual application, polar coding has better performance in an application scenario of a small data packet. However, a scenario of a small MCS is corresponding to a lower bit rate, and certainly is corresponding to a smaller data packet. Therefore, when an allocated MCS is less than a particular threshold, the polar code is used, or when an allocated MCS is greater than a particular threshold, the LDPC code is used. Therefore, performance of the entire communications system can be optimal.

Further, the sub-solution may be combined with another coding method in this specification, so that signaling is reduced, and multicheck can be performed on the indicated channel coding scheme.

Sub-solution 2: The scheduling information of transmission of the data is a time-frequency resource used during transmission of the data.

Optionally, a channel coding scheme is determined based on a size of a time-frequency resource indicated during transmission of the data. For example, a size of resource allocation information indicated by a control channel during transmission of the data may be associated with the channel coding scheme. For example, when the size of the resource allocation information during transmission of the data exceeds a particular threshold, a first channel coding scheme may be used, or when the size of the resource allocation information during transmission of the data does not exceed a particular threshold, a second channel coding scheme is used.

In addition to that a size of a transmitted data packet may be determined by using a time-frequency resource used during transmission of the data, the size of the data packet may alternatively be determined by using an MCS value of the data. Different data packet sizes are associated with different channel coding schemes. For example, when a size of a data packet exceeds a particular threshold, a first channel coding scheme is used, or when a size of a data packet does not exceed a particular threshold, a second channel coding scheme is used.

In the solution of this embodiment of the present invention, when the channel coding scheme is determined based on the size of the time-frequency resource indicated during transmission of the data:

Optionally, the channel coding scheme is determined based on a size of a transmission resource actually available during transmission of the data. Based on resource allocation location information indicated by the control channel during transmission of the data, after a quantity of resources (for example, symbols or subcarriers) actually available during transmission of the data is considered, the size of the resource actually available during transmission is determined, and a corresponding channel coding scheme is determined and used based on the size of the actually available resource.

A difference between the size of the actually available resource and the size of the indicated resource is caused mainly because data or a signal having a higher transmission priority may exist on the indicated resource, for example, a specific reference signal, a system message, or control information, and transmission of the data needs to give way to transmission of the data or signal having the higher transmission priority. Another reason is that the indicated resource is used to transmit coded information, but an information bit is a bit before coding, and a size of the information bit is usually less than a size of a coded bit.

Optionally, the channel coding scheme is determined based on a size of an actual information bit during transmission of the data. Based on resource allocation location information indicated by the control channel during transmission of the data, after a quantity of resources (for example, symbols or subcarriers) actually available during transmission of the data and an MCS value used during transmission are considered, the size of the actual information bit during transmission is determined, and a corresponding channel coding scheme is determined and used based on the size of the actually available information bit.

Optionally, different channel coding schemes may be associated with transmission time interval scheduling based on single-TTI (Transmission Time Interval, transmission time interval, that is, duration occupied for one transmission in time domain) scheduling or multi-TTI scheduling.

Optionally, different channel coding schemes may be associated with single-TTI transmission or a multi-TTI binding manner.

Further, the determined size of the resource may be compared with a threshold indicating a size of a data information bit or a coded data packet. The threshold may be configured by the base station, or may be predefined. For example, the value may be 128, 1024, or 512. Once the threshold is configured, indicated, or predefined, the threshold is determined for the UE.

In a specific implementation scenario, in theoretical and actual application, polar coding has better performance in an application scenario of a small data packet. Therefore, when an allocated resource is less than a particular threshold, the polar code is used, or when an allocated resource is greater than a particular threshold, the LDPC code is used. In this way, performance of the entire system can be optimal.

The sub-solution may be combined with another method, so that signaling is reduced, and multicheck can be performed on the indicated or used channel coding parameter.

Sub-solution 3: The scheduling information of transmission of the data is a system bandwidth of a data channel.

The system bandwidth of the data channel may be an actual system bandwidth value, a minimum system bandwidth value, or a maximum system bandwidth value during data channel transmission.

Optionally, the actual system bandwidth during data channel transmission, or the minimum system bandwidth value or the maximum system bandwidth value available during transmission of the data may be associated with the channel coding scheme and/or the transmission waveform used by the UE.

A specific association manner may be: The actual system bandwidth during data channel transmission, or the minimum system bandwidth value or the maximum system bandwidth value available during transmission of the data is compared with a predefined bandwidth threshold. When the bandwidth value is greater than the bandwidth threshold, a channel coding scheme A, a transmission waveform A used by the UE, or both are used; or when the bandwidth value is not greater than the bandwidth threshold, a channel coding scheme B, a transmission waveform B used by the UE, or both are used.

Benefits are as follows: Using bandwidth of a control channel for association is an implicit indication manner, so that signaling overheads can be reduced. In theoretical and actual application, the polar has better performance in an application scenario of a small data packet. Therefore, when an allocated bandwidth is less than a particular threshold, that is, when a size of a data packet transmitted by the UE is greater than a particular threshold, the polar code is used; or when an allocated bandwidth is greater than a particular threshold, the LDPC code is used. In this way, performance of the entire system can be optimal. In addition, transmission on a relatively low system bandwidth is determined based on a capability or a service characteristic of the UE. In this case, using DFT-S-OFDM can reduce power consumption and improve coverage. On the contrary, when OFDM is used on a relatively high system bandwidth, a higher scheduling gain can be obtained. Therefore, associating a system bandwidth with a transmission waveform can maximize system performance.

The sub-solution may be combined with another method, so that signaling is reduced, and multicheck can be performed on the indicated second parameter.

Sub-solution 4: The scheduling information of transmission of the data is a carrier configuration of transmission of the data.

For example, when one carrier is used during transmission of the data, a coding method A, a transmission waveform A used by the UE, or both, for example, a polar coding method and/or DFT-S-OFDM, are associated. When a plurality of carriers are used during transmission of the data, a coding method B and/or a transmission waveform B used by the UE, for example, an LDPC coding method and/or OFDM, may be associated.

For another example, when a carrier of a serving cell is used during transmission of the data, a coding method A, a transmission waveform A used by the UE, or both are associated. If a cross-carrier scheduled non-serving cell is used for transmission, a coding method B and/or a transmission waveform B used by the UE may be associated.

Benefits are as follows: The sub-solution is a method for implicitly indicating a channel coding parameter, and may be combined with another method, so that signaling is reduced, and multicheck can be performed on the indicated or used channel coding scheme and/or transmission waveform used by the UE.

Sub-solution 5: The scheduling information of transmission of the data is a hybrid automatic repeat request (English: Hybrid Automatic Repeat reQuest, HARQ for short) parameter of transmission of the data.

For example, the HARQ parameter may be a type of a HARQ, including a synchronous HARQ or an asynchronous HARQ; or a HARQ process number (some process numbers are corresponding to a channel coding scheme A and/or a transmission waveform A used by the UE, and the other process numbers are corresponding to a channel coding scheme B and/or a transmission waveform B used by the UE). Herein, the type of the HARQ is a HARQ related to a small data packet or a HARQ related to a large data packet; a delay-sensitive HARQ or a delay-insensitive HARQ; or a HARQ related to a high speed or a HARQ related to a low speed. Different HARQ parameter values are corresponding to different channel coding schemes and/or transmission waveforms used by the UE.

Benefits are as follows: Different HARQ parameters indicate different channel coding schemes. Therefore, a HARQ parameter or type may be directly used to implicitly indicate a channel coding type, so that signaling overheads can be reduced. In addition, the HARQ parameter may be implicitly associated with different schemes of the transmission waveform, to reduce signaling overheads.

The sub-solution may be combined with another method, so that signaling is reduced, and multicheck can be performed on the indicated or used channel coding scheme and/or transmission waveform used by the UE.

Sub-solution 6: The scheduling information of transmission of the data is used to indicate a frequency hopping configuration of transmission of the data.

For example, when the scheduling information of transmission of the data indicates that frequency hopping is used during transmission on a scheduled data channel, a channel coding scheme A, a transmission waveform A used by the UE, or both are used; or when frequency hopping is not used during transmission on a scheduled data channel, correspondingly, a channel coding scheme B, a transmission waveform B used by the UE, or both are used.

Benefits are as follows: When frequency hopping is used, it indicates that a bandwidth during transmission needs to be greater than a particular bandwidth (for example, a bandwidth at a low frequency is usually approximately 1 MHz, a bandwidth at a high frequency may reach 5 MHz or 10 MHz, and a specific value is related to a frequency used during transmission). In this case, the system can obtain a frequency hopping gain during transmission. Therefore, for example, if frequency hopping can be used, LDPC is used, or if frequency hopping cannot be used, the polar is not used, so that the system can obtain a highest performance gain. Similarly, frequency hopping, especially frequency hopping within one transmission TTI, is more suitable for the OFDM waveform, and non-frequency hopping is more suitable for the DFT-S-OFDM waveform.

The sub-solution may be combined with another method, so that signaling is reduced, and multicheck can be performed on the indicated or used channel coding scheme and/or transmission waveform used by the UE.

Sub-solution 7: The scheduling information of transmission of the data is a retransmission configuration of transmission of the data.

To be specific, the first parameter may be indication information of first transmission and retransmission during transmission of the data. For example, when first transmission is indicated, LDPC, the OFDM transmission waveform used by the UE, or both are used; or when retransmission is indicated, non-LDPC (for example, polar), the DFT-S-OFDM transmission waveform used by the UE, or both are used.

Benefits are as follows: During retransmission, a bit rate is relatively high, a data packet is relatively large, so that a higher performance gain can be obtained when LDPC is used; during first transmission, a bit rate is relatively low or a data packet is relatively small, so that the polar is used. In this way, the entire system can obtain a higher performance gain. The sub-solution may be combined with another method, so that signaling is reduced, and multicheck can be performed on the indicated or used channel coding scheme. Similarly, during first transmission, OFDM is used. Retransmission indicates that coverage or link quality is poor, and DFT-S-OFDM is used, so that highest system performance can be obtained.

Sub-solution 8: The scheduling information of transmission of the data is a generation parameter of a demodulation reference signal.

To be specific, the first parameter may be a generation parameter of a demodulation reference signal of a data channel or a control signal, for example, a sequence generation parameter, and may specifically include: a generator polynomial, an initial value of a generation sequence, a root sequence number of a generation sequence, a cyclic shift (English: Cyclic Shift, CS for short) value, an orthogonal cover code (English: Orthogonal Cover Code, OCC for short), and the like.

Benefits are as follows: The sub-solution is a method for implicitly indicating a channel coding parameter, and may be combined with another method, so that signaling is reduced, and multicheck can be performed on the indicated second parameter.

Type 4: Feedback information used for transmission of the data.

The feedback information used for transmission of the data may be any one or more of the following sub-solutions. Sub-solution 1: The feedback information used for transmission of the data is a parameter of a radio link of the UE. The parameter of the radio link of the UE is associated with the channel coding scheme.

The parameter of the radio link is a parameter representing signal quality of a radio link between the UE and a network device communicating with the UE, for example, a base station or an equivalent device. For example, the parameter includes a path loss, a channel quality indicator (English: Channel Quality Indicator, CQI for short), a signal to interference plus noise ratio (English: Signal-to-Interference-plus-Noise Ratio, SINR for short), a signal to noise ratio (English: Signal to Noise Ratio, SNR for short), a precoding matrix indicator (English: Precoding Matrix Indicator, PMI for short), a beamforming identity (English: Beamforming Identity, BI for short), a rank indicator (English: Rank Indicator, RI for short), and the like.

Benefits are as follows: The sub-solution is a method for implicitly indicating a channel coding parameter, and may be combined with another method, so that signaling is reduced, and multicheck can be performed on the indicated or used channel coding scheme and/or transmission waveform used by the UE. An optional factor is that when quality of a radio link for communication of the UE is relatively poor, a size of a data packet that can be transmitted is not excessively large; or when quality of a radio link for communication of the UE is relatively good, a size of a data packet that can be transmitted may be larger. Therefore, when parameters of a radio link are associated with different channel coding schemes and/or transmission waveform schemes, system performance can be optimized.

Sub-solution 2: The feedback information used for transmission of the data is a HARQ acknowledgement message used for transmission of the data.

The HARQ acknowledgement message may be associated with different channel coding schemes and/or transmission waveforms used by the UE. The HARQ acknowledgement message includes an ACK and a NACK. For example, when the HARQ acknowledgement message is an ACK, it indicates that a current transmission condition is relatively good, and a large data packet can be transmitted. In this case, it implicitly indicates that LDPC or OFDM needs to be used. When the HARQ acknowledgement message is a NACK, it indicates that a current transmission condition is relatively poor, and it is more suitable for transmission of a relatively small data packet. In this case, it implicitly indicates that non-LDPC needs to be used or DFT-S-OFDM is more suitable, to obtain higher coverage or link performance under a same transmit power.

Benefits are as follows: A status of the HARQ acknowledgement message is associated with a channel coding scheme, so that transmission performance under the HARQ can be optimized.

Type 5: System parameter used for transmission of the data.

The system parameter used for transmission of the data may be any one or more of the following sub-solutions.

Sub-solution 1: The system parameter used for transmission of the data may be a transmission node type or a transmission frequency. Different parameter node types or transmission frequencies are associated with different channel coding schemes and/or transmission waveforms used by the UE.

For example, for a low-frequency (below 3 GHz) or a low-and-medium-frequency (below 6 GHz) transmission node, because a system bandwidth is relatively low, the turbo or polar code may be used. For a medium-frequency or medium-and-high frequency (above 6 GHz) transmission node, because a system bandwidth is relatively high, LDPC is used. For another example, a transmission node at a frequency above 6 GHz uses the DFT-S-OFDM waveform. For another example, a transmission node at a frequency below 6 GHz uses OFDM.

Optionally, a type or a value range of a cell identifier may be implicitly associated with a channel coding type.

When a PCID is within a first range (for example, 0 to 504), the turbo or polar, the DFT-S-OFDM waveform, or both are used; or when a PCID is beyond a first range (for example, the PCID is within a range greater than or equal to 505), LDPC, the OFDM waveform, or both are used.

Benefits are as follows: Different transmission frequencies or value ranges of the PCID are associated with different transmission nodes, are corresponding to scenarios of different transmission rates, and then match or are associated with different channel coding schemes, so that system performance can be optimal. The sub-solution may be combined with another method, so that signaling is reduced, and multicheck can be performed on the indicated or used channel coding scheme and/or transmission waveform used by the UE.

Sub-solution 2: The system parameter used for transmission of the data may be a transmission mode used during transmission of the data. To be specific, different data transmission modes are associated with different channel coding schemes. For example, the transmission modes are divided, some transmission modes are corresponding to a channel coding scheme A and/or a transmission waveform A used by the UE, and the other transmission modes are corresponding to a channel coding scheme B and/or a transmission waveform B used by the UE. The second parameter may be determined based on a type of a used reference signal, or may be determined based on different MIMO transmission modes (for example, single-stream or multi-stream, diversity or multiplexing), or may be determined based on a combination of the foregoing plurality of manners.

Benefits are as follows: The sub-solution is a method for implicitly indicating a channel coding parameter, and may be combined with another method, so that signaling is reduced, and multicheck can be performed on the indicated or used channel coding method and/or transmission waveform used by the UE.

Sub-solution 3: The system parameter used for transmission of the data may be a set of particular parameters. For example:

The particular system parameters include a CP type (a normal CP or an extended CP) of the system, a system bandwidth value used for transmission, a maximum system bandwidth value used for transmission, a minimum system bandwidth value used for transmission, a subcarrier spacing, a center frequency, QoS of a service, and a service type (for example, a mobile data service, an Internet of Things service, or an ultra-low delay service). One or more of the system parameters may be associated with a particular channel coding scheme and/or transmission waveform used by the UE.

For example, for an mMTC Internet of Things service, the polar code and/or the DFT-S-OFDM waveform may be used. For an eMBB service, the LDPC coding and/or the OFDM waveform may be used.

For another example, for a highly-reliable and low-delay service, LDPC and/or the OFDM waveform may be used; for a delay-insensitive service, the polar and/or the DFT-S-OFDM waveform may be used.

Benefits are as follows: The sub-solution is a method for implicitly indicating a channel coding parameter, and may be combined with another method, so that signaling is reduced, and multicheck can be performed on the indicated or used channel coding scheme and/or transmission waveform used by the UE.

In a scenario of communication between the UE and the network device and/or a scenario of communication on a sidelink, in addition to the foregoing type, the first parameter may alternatively include one or more of the following:
(1) a resource selection mode during transmission of the data, for example, a mode in which the UE itself selects a resource or a mode in which the base station schedules a resource, where different transmission modes are associated with different channel coding schemes;
(2) a resource identifier used during transmission of the data, where different resource identifiers or resource pool identifiers are associated with different channel coding schemes;
(3) a resource type used during transmission of the data, where different resource types or resource pool types are associated with different channel coding schemes;
(4) a synchronization source type used during transmission of the data, where different synchronization source types are associated with different channel coding schemes, and the synchronization source type may be a GNSS, a base station, UE, or the like; and
(5) a moving speed of the user equipment during transmission of the data, where different mobile channels are corresponding to different channel coding schemes.

For an uplink/downlink or a sidelink, if the UE has not received or may not receive a data information transmission, the channel coding scheme, the transmission waveform used by the UE, or both during transmission of the data are determined by using a particular method.

When the UE has not received uplink scheduling information and/or downlink scheduling information, a default or predefined channel coding scheme, a default or predefined transmission waveform used by the UE, or both are used, or a channel coding scheme, a transmission waveform used by the UE, or both that are used during previous transmission are used, or a channel coding scheme, a transmission waveform used by the UE, or both are determined based on a size of a data packet.

In addition, if the first parameter detected by the UE indicates that the user equipment detects only common control information (for example, the UE detects only common downlink or uplink scheduling or control signaling), or control information of persistent or semi-persistent scheduling, or the first parameter is signal quality of a link, and the signal quality of the link indicates that the user equipment is in a particular handover period or handover event, the UE determines, in a predefined manner, the second parameter and/or the transmission waveform used by the UE.

In an optional solution of this embodiment of the present invention, that the UE determines, from a plurality of channel coding schemes based on the first parameter, the second parameter and/or the transmission waveform used by the UE includes:
when the first parameter indicates that the user equipment transmits the data in a grant free manner, determining, by the user equipment based on at least one of the following parameters, the second parameter and/or the transmission waveform used by the UE:
a size of a data packet;
a channel state value;
a resource used during transmission of the data in the grant free manner; and
a default or predefined manner.

For example, when the UE sends a particular PRACH message, a default or predefined channel coding scheme, a default or predefined transmission waveform used by the UE, or both are used, or a channel coding scheme, a transmission waveform used by the UE, or both that are used during previous transmission are used, or a channel coding scheme, a transmission waveform used by the UE, or both are determined based on a size of a data packet.

When the UE sends a data packet transmitted in a contention-free (Grant free) manner, because there is no scheduling information before sending, the channel coding scheme, the transmission waveform used by the UE, or both are determined based on a size of the data packet, a CQI value, an SINR, an SNR, an identifier of a resource or a resource pool on which a grant free operation is performed, or an access type of grant free transmission that is performed in a default manner (for example, grant free transmission before acknowledgement or grant free transmission after acknowledgement).

When the UE performs handover, or when a particular handover event (for example, a ping-pong period) occurs, or when the UE is within a handover interval, the UE uses a default channel coding scheme and/or transmission waveform used by the UE, for example, the polar and/or the OFDM waveform.

When a particular condition occurs, for example, when a power of the UE is less than a particular threshold, or when CSI/a beam BI/a type of a transmission node changes, channel coding scheme switching is triggered and/or performed. In this case, the UE sends a channel coding scheme switching request message to the base station.

In conclusion, different values of the first parameter are associated with LDPC and non-LDPC and/or different transmission waveforms used by the UE. Therefore, a channel coding scheme, a transmission waveform used by the UE, or both that are used during specific data transmission can be indicated. In addition, a corresponding channel coding scheme, a corresponding transmission waveform used by the UE, or both can be associated with application scenarios and used based on the application scenarios in which different channel coding and/or transmission waveforms used by the UE have advantages. Therefore, performance of the entire system is optimal.

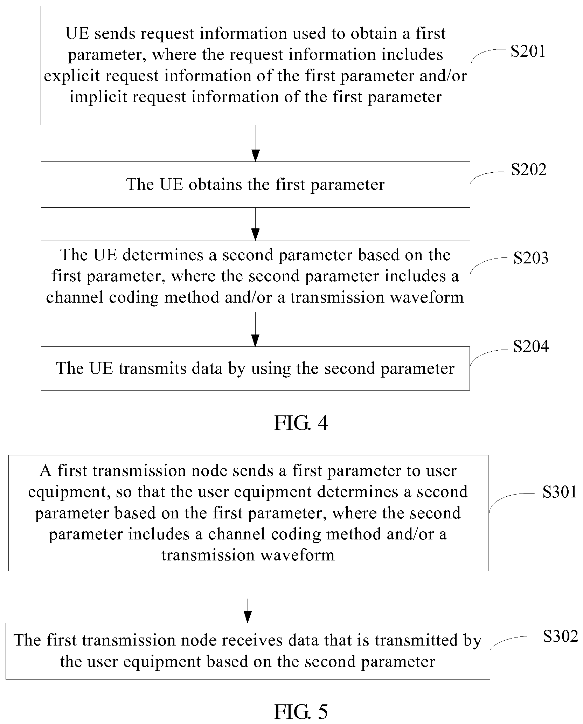

FIG. 4 is a flowchart of a data transmission method according to Embodiment 2 of the present invention. As shown in FIG. 4, the method includes the following processing steps:
Step S201: UE sends request information used to obtain a first parameter, where the request information includes explicit request information of the first parameter and/or implicit request information of the first parameter.
Step S202: The UE obtains the first parameter.
Step S203: The UE determines a second parameter based on the first parameter, where the second parameter includes a channel coding scheme and/or a transmission waveform.
Step S204: The UE transmits data by using the second parameter.

In the solution of this embodiment of the present invention, in a process in which the UE transmits the data, when a transmission parameter of the UE changes, the UE is triggered to send request information used to obtain the channel coding scheme and/or the transmission waveform used by the UE.

It should be noted that the transmission parameter of the UE includes at least one of the following:
a path loss, CSI, a BSR, a PHR, a BI, a type of a communications node, and HARQ acknowledgement information for received data.

In the solution of this embodiment of the present invention, the implicit request information of the channel coding scheme and/or the transmission waveform used by the UE includes one or more of the following:
scheduling request (English: Scheduling Request, SR for short) information;
a buffer status report (English: Buffer Status Report, BSR for short);
channel state information (English: Channel State Information, CSI for short);
a power headroom report (English: Power Headroom Report, PHR for short);
a HARQ acknowledgement message;
beam indication information; and
a type or parameter of an uplink reference signal sequence.

The following describes in detail a specific implementation of coding method request information.
(1) SR: Scheduling request. The UE may add the request information of the first parameter to the SR, for example, add one bit, to indicate whether LDPC or non-LPDC, and/or a different transmission waveform are requested for use. Alternatively, the UE may implicitly indicate the second parameter by using request content of the SR. For example, a value 1 (for example, 0) of the SR indicates that there is no scheduling request. A value 2 (for example, 1) of the SR indicates a scheduling request for transmission of a large data packet, and in this case, it implicitly indicates that LDPC needs to be used. A value 3 (for example, 2) of the SR indicates a scheduling request for transmission of a small data packet, and in this case, it implicitly indicates that non-LDPC needs to be used. Similarly, the scheduling request information may alternatively be used to request a transmission waveform needing to be used.
   Benefits are as follows: Signaling can be reduced, and in addition, a base station can learn, in an SR stage, a size of a data packet of the UE, and a request for a corresponding CSR and/or a request for a corresponding transmission waveform of the UE.
(2) BSR: Buffer status report. The UE may add the request information of the first parameter to the BSR, for example, add one bit, to indicate whether LDPC, a different transmission waveform, or both are requested for use, or whether non-LPDC, a different transmission waveform, or both are requested for use. Alternatively, the UE may implicitly indicate the second parameter by using content of the BSR. For example, when a value of the BSR is greater than a particular threshold (which is indicated, configured, or predefined by a base station), it indicates that a relatively large data packet needs to be transmitted, and in this case, it implicitly indicates that LDPC, OFDM, or both need to be used. When a value of the BSR is less than a particular threshold, it indicates that a relatively small data packet needs to be transmitted, and in this case, it implicitly indicates that non-LDPC, DFT-S-OFDM, or both need to be used. Similarly, the BSR may be further used to request a transmission waveform needing to be used.
   Benefits are as follows: Signaling can be reduced, and in addition, the base station can learn, in a BSR report stage, a size of a data packet of the UE, and a request for a corresponding CSR and/or a request for a corresponding transmission waveform of the UE.
(3) CSI: Channel state information indication. The UE may add the request information of the first parameter to the CSI, for example, add one bit, to indicate whether LDPC, a different transmission waveform, or both are requested for use, or whether non-LPDC, a different transmission waveform, or both are requested for use. Alternatively, the UE may implicitly indicate the second parameter by using content of the CSI report. For example, when values of one or more parameters in the CSI (including a PMI, an RI, a CQI, and a BI/QCL: indicating an identifier or a type of a beam on which the UE is located, or whether quasi co-location is considered when the UE is located between different beams) are greater than a particular threshold (which is indicated, configured, or predefined by a base station), it indicates that a current channel condition is relatively good, and a large data packet can be transmitted, and in this case, it implicitly indicates that LDPC, an OFDM waveform, or both need to be used. When a value of the CSI is less than a particular threshold, it indicates that a current channel condition is relatively poor, and it is more suitable for transmission of a relatively small data packet, and in this case, it implicitly indicates that non-LDPC, a DFT-S-OFDM waveform, or both need to be used.
   Benefits are as follows: Signaling can be reduced. In addition, CSI reports are associated with different channel coding schemes and/or corresponding transmission waveforms of the UE, so that transmission can better match a radio channel, and system performance can be improved.
(4) PHR: Power headroom report: The UE may add the request information of the first parameter to the PHR, for example, add one bit, to indicate whether LDPC, a different transmission waveform, or both are requested for use, or whether non-LPDC, a different transmission waveform, or both are requested for use. Alternatively, the UE may implicitly indicate the second parameter by using content of the PHR report. For example, when a value reported in the PHR is greater than a particular threshold (which is indicated, configured, or predefined by a base station), it indicates that the UE currently has sufficient power headroom, and a large data packet can be transmitted, and in this case, it implicitly indicates that LDPC, an OFDM waveform, or both need to be used. When a value reported in the PHR report is less than a particular threshold, it indicates that the UE currently has insufficient power headroom, and it is more suitable for transmission of a relatively small data packet or it is more suitable for using a low-power consumption channel coding scheme, for example, non-LDPC and/or a DFT-S-OFDM waveform. Similarly, the PHR may be further used to request a transmission waveform needing to be used.
   Benefits are as follows: Signaling can be reduced. In addition, PHR reports are associated with different channel coding schemes and/or transmission waveforms used by the UE, so that the power headroom of the UE can better match a radio channel, and system performance can be improved.
(5) HARQ acknowledgement message. The HARQ acknowledgement message includes an ACK acknowledgement message or a NACK acknowledgement message. The UE may add the request information of the first parameter to the HARQ acknowledgement message, for example, add one bit, to indicate whether LDPC, a different transmission waveform, or both are requested for use, or whether non-LPDC, a different transmission waveform, or both are requested for use. Alternatively, the UE may implicitly indicate the second parameter by using content of the HARQ acknowledgement message. For example, when the HARQ acknowledgement message is an ACK, it indicates that a current transmission condition is relatively good, and a large data packet can be transmitted, and in this case, it implicitly indicates that LDPC, an OFDM waveform, or both need to be used. When the HARQ acknowledgement message is a NACK, it indicates that a current transmission condition is relatively poor, and it is more suitable for transmission of a relatively small data packet, and in this case, it implicitly indicates that non-LDPC, a DFT-S-OFDM waveform, or both need to be used.
   Benefits are as follows: Signaling can be reduced. In addition, HARQ acknowledgement messages are associated with different channel coding schemes and/or transmission waveforms used by the UE, so that transmission can better match a radio channel, and system performance can be improved.
(6) Beam indication information. The beam indication information is indication information of an identifier and an identifier type of a beam used by the UE or connected to the UE when the UE performs communication. Particularly, at a high frequency, the UE may be located in beams of different types (a narrow beam having a high forming gain, or a relatively broad beam having broader or wider coverage) based on a distance between the UE and a communications node. Different beams may be associated with different coding methods and/or waveforms used by the UE.
(7) Type or parameter of the uplink reference signal sequence, for example, a preamble sequence sent by the UE. The type or parameter of the uplink reference signal sequence specifically includes different preamble sequences or sequence sets. The UE may implicitly indicate the request information of the first parameter by using different preamble sequences or sequence subsets. For example, a first preamble sequence or sequence subset indicates that LDPC, an OFDM waveform, or both need to be used, and a second preamble sequence or sequence subset indicates that non-LDPC, a DFT-S-OFDM waveform, or both need to be used.

Benefits are as follows: Different channel coding schemes and/or transmission waveforms used by the UE are associated or indicated in a PRACH access stage, so that a base station can learn a requirement of the UE side in advance, and signaling can be reduced.

Optionally, the UE may alternatively implicitly indicate the second parameter by sending the message, including: performing indication by using a reserved field that is not yet used when the message is transmitted.

Optionally, the UE may alternatively implicitly indicate the second parameter by sending the message by using the resource associated with the first parameter.

In addition, optionally, the UE may alternatively implicitly indicate the second parameter by using the first parameter of the channel used for sending the message. The first parameter includes: a CRC mask, a used RS parameter (as in Embodiment 1), resource location information (for example, resource location information in time domain and/or frequency domain or code domain) used during transmission, a QAM modulation order, and the like.

Further, optionally, the eNB may send a response message of a request of the second parameter, where the response message includes a condition, a parameter, and duration of using an indicated coding scheme, a HARQ process, or an SPS configuration or an SPS process.

Further, optionally,
when the reported request information of the first parameter indicates LDPC and/or OFDM, the eNB performs configuration based on LDPC and/or OFDM; or
when the reported request information of the first parameter indicates non-LDPC and/or DFT-S-OFDM, the eNB may perform configuration based on LDPC or non-LDPC, and/or OFDM or DFT-S-OFDM.

The UE reports the request information of the first parameter, to request the needed second parameter from the base station, thereby improving effectiveness of selecting an actual channel coding scheme, and optimizing system performance.

The UE reports the request information of the first parameter, to request the needed second parameter from the base station, and indicate the request of the UE by using various implicit indication methods.

Optionally, after receiving the request information that is of the first parameter and that is sent by second user equipment, the base station may send a response or acknowledgement message of the request message, to indicate a specific value of the used second parameter.

FIG. 5 is a flowchart of a data transmission method according to Embodiment 3 of the present invention. As shown in FIG. 5, the method includes the following steps.

Step S301: A first transmission node sends a first parameter to user equipment, so that the user equipment determines a second parameter based on the first parameter, where the second parameter includes a channel coding scheme and/or a transmission waveform.

The first transmission node may be a UE device, or a network device such as a base station.

Step S302: The first transmission node receives data that is transmitted by the user equipment based on the second parameter.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data includes at least one of the following:
a modulation and coding scheme MCS value of the data; and
a time-frequency resource used for transmission of the data.

In a possible design, the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

In a possible design, when the first parameter is common control information or control information of persistent scheduling, or when the first parameter is signal quality of a link, and the signal quality of the link indicates that the user equipment is in a particular handover period or handover event, the first parameter indicates a predefined coding method.

In a possible design, when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

In a possible design, before the first transmission node sends the first parameter to the user equipment, the method further includes:
receiving, by the first transmission node, request information that is used to obtain the first parameter and that is sent by the user equipment, where the request information includes explicit request information of the first parameter and/or implicit request information of the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

In a possible design, after the receiving, by the first transmission node, request information that is used to obtain the first parameter and that is sent by the user equipment, the method further includes:
sending, by the first transmission node, response information of the first parameter to the user equipment, where the response information of the first parameter indicates a specific value of the second parameter used by the user equipment.

For a specific manner in which the response information of the first parameter indicates the second parameter, refer to Embodiment 1 and Embodiment 2.

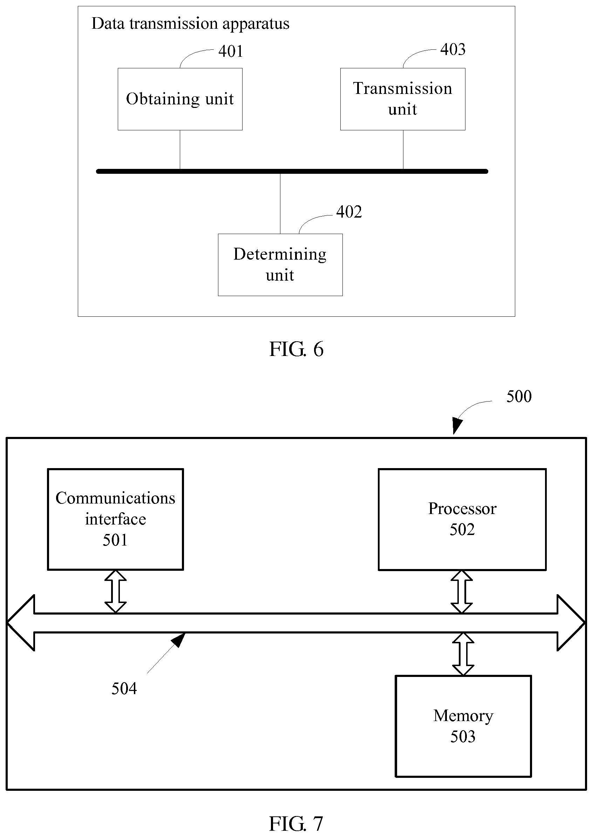

FIG. 6 is a schematic structural diagram of a data transmission apparatus according to Embodiment 1 of the present invention. The apparatus shown in FIG. 6 is deployed in user equipment, and is configured to perform the data transmission method performed by the user equipment (UE) in Embodiment 1 and Embodiment 2. The following describes a main function of the data transmission apparatus, and for a part not described herein, refer to Embodiment 1, Embodiment 2, and the accompanying drawings corresponding to Embodiment 1 and Embodiment 2.

The data transmission apparatus shown in FIG. 6 includes an obtaining unit 401, a determining unit 402, and a transmission unit 403, where
the obtaining unit 401 is configured to obtain a first parameter;
the determining unit 402 is configured to determine a second parameter based on the first parameter, where the second parameter includes a channel coding scheme and/or a transmission waveform; and
the transmission unit 403 is configured to transmit data by using the second parameter.

In a possible design, the channel coding scheme includes:
a low-density check code; and
a channel coding scheme other than the low-density check code.

In a possible design, the transmission waveform includes one of the following:
an orthogonal frequency division multiplexing OFDM waveform; and
a discrete Fourier transform DFT-spread-orthogonal frequency division multiplexing OFDM waveform.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, that the determining unit 402 determines the second parameter based on the first parameter specifically includes:
determining a specific scheme of the channel coding in the second parameter and/or a specific scheme of the transmission waveform in the second parameter based on a value of the first parameter or a status of the first parameter, where
the value of the first parameter or the status of the first parameter is associated with one or more specific schemes of the channel coding and/or specific schemes of the transmission waveform.

In a possible design, that the determining unit 402 determines the second parameter based on the first parameter specifically includes:
determining a size of a transmitted data packet based on the scheduling information of the data, where the scheduling information of the data includes at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

In a possible design, the scheduling information of transmission of the data is an MCS configuration of the data; and
that the determining unit 402 determines the second parameter based on the first parameter specifically includes:
when the MSC configuration indicates a type or an index of an MCS table used during transmission of the data, determining the channel coding scheme in the second parameter based on the type or the index value of the MCS table; or
when the MSC configuration indicates an MCS value used during transmission of the data, determining the channel coding scheme in the second parameter based on the MCS value and a predefined MCS table.

In a possible design, that the determining unit 402 determines the second parameter based on the first parameter specifically includes:
when the first parameter indicates that the user equipment detects only common control information or control information of persistent scheduling, or when the first parameter is signal quality of a link, and the signal quality of the link indicates that the user equipment is in a particular handover period or handover event, determining, by the determining unit 402, the second parameter in a predefined manner.

In a possible design, that the determining unit 402 determines the second parameter based on the first parameter specifically includes:
when the first parameter indicates that the user equipment transmits the data in a grant free manner, determining, by the determining unit 402, the second parameter based on at least one of the following parameters:
a size of a data packet;
a channel state value;
a resource used during transmission of the data in the grant free manner; and
a default or predefined manner.

In a possible design, the apparatus further includes a sending unit, where
the sending unit is configured to: before the obtaining unit 401 obtains the first parameter, send request information used to obtain the first parameter, where the request information includes explicit request information of the first parameter and/or implicit request information of the first parameter.

In a possible design, that the sending unit sends the request information used to obtain the first parameter specifically includes:
when a transmission parameter of the user equipment changes, sending, by the sending unit, the request information used to obtain the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

Specifically, the obtaining unit 401 may obtain the first parameter from the data transmission apparatus, or may obtain the first parameter from another external device (for example, a base station or another UE).

FIG. 7 is a schematic structural diagram of a data transmission apparatus according to Embodiment 2 of the present invention. The apparatus shown in FIG. 7 may be user equipment, and is configured to perform the data transmission method performed by the user equipment (UE) in Embodiment 1 and Embodiment 2. The following describes a main function of the data transmission apparatus 500, and for a part not described herein, refer to Embodiment 1, Embodiment 2, and the accompanying drawings corresponding to Embodiment 1 and Embodiment 2.

As shown in FIG. 7, the data transmission apparatus 500 includes a processor 502, a memory 503, and a communications interface 501. The processor 502, the memory 503, and the communications interface 501 are connected by using a communications bus 504. The communications bus 504 may be a peripheral component interconnect (peripheral component interconnect, PCI for short) bus, an extended industry standard architecture (extended industry standard architecture, EISA for short) bus, or the like. The communications bus 504 may be classified into an address bus, a data bus, a control bus, and the like. For ease of representation, only one thick line is used to represent the bus in FIG. 7, but this does not mean that there is only one bus or only one type of bus.

The communications interface 501 is configured to obtain data from an external device (for example, a network device). For example, data processed by the processor 502 may be transmitted to the external device by using the communications interface 502.

The memory 503 is configured to store a program. Specifically, the program may include program code, and the program code includes a computer operation instruction. The memory 503 may include a random access memory (random access memory, RAM for short), and may further include a nonvolatile memory (non-volatile memory), for example, at least one magnetic disk storage. The figure shows only one processor. Certainly, there may be a plurality of processors 503 according to needs. The data transmission apparatus 500 shown in FIG. 7 may be configured to perform the data transmission method provided in this application. The processor 502 performs, based on the program code stored in the memory 503, the following operations:
obtaining a first parameter;
determining a second parameter based on the first parameter, where the second parameter includes a channel coding scheme and/or a transmission waveform; and
transmitting data by using the second parameter.

In a possible design, the channel coding scheme includes:
a low-density check code; and
a channel coding scheme other than the low-density check code.

In a possible design, the transmission waveform includes one of the following:
an orthogonal frequency division multiplexing OFDM waveform; and
a discrete Fourier transform DFT-spread-orthogonal frequency division multiplexing OFDM waveform.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, that the processor 502 determines the second parameter based on the first parameter specifically includes:
determining a specific scheme of the channel coding in the second parameter and/or a specific scheme of the transmission waveform in the second parameter based on a value of the first parameter or a status of the first parameter, where
the value of the first parameter or the status of the first parameter is associated with one or more specific schemes of the channel coding and/or specific schemes of the transmission waveform.

In a possible design, that the processor 502 determines the second parameter based on the first parameter specifically includes:
determining a size of a transmitted data packet based on the scheduling information of the data, where the scheduling information of the data includes at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

In a possible design, the scheduling information of transmission of the data is an MCS configuration of the data; and
that the processor 502 determines the second parameter based on the first parameter specifically includes:
when the MSC configuration indicates a type or an index of an MCS table used during transmission of the data, determining the channel coding scheme in the second parameter based on the type or the index value of the MCS table; or
when the MSC configuration indicates an MCS value used during transmission of the data, determining the channel coding scheme in the second parameter based on the MCS value and a predefined MCS table.

In a possible design, that the processor 502 determines the second parameter based on the first parameter specifically includes:
when the first parameter indicates that the user equipment detects only common control information or control information of persistent scheduling, or when the first parameter is signal quality of a link, and the signal quality of the link indicates that the user equipment is in a particular handover period or handover event, determining, by the determining unit, the second parameter in a predefined manner.

In a possible design, that the processor 502 determines the second parameter based on the first parameter specifically includes:
when the first parameter indicates that the user equipment transmits the data in a grant free manner, determining, by the determining unit, the second parameter based on at least one of the following parameters:
a size of a data packet;
a channel state value;
a resource used during transmission of the data in the grant free manner; and
a default or predefined manner.

In a possible design, the processor 502 is further configured to: before the obtaining unit obtains the first parameter, control the communications interface to send request information used to obtain the first parameter, where the request information includes explicit request information of the first parameter and/or implicit request information of the first parameter.

In a possible design, that the processor 502 controls the communications interface to send request information used to obtain the first parameter specifically includes:
when a transmission parameter of the user equipment changes, controlling, by the processor 502, the communications interface to send the request information used to obtain the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

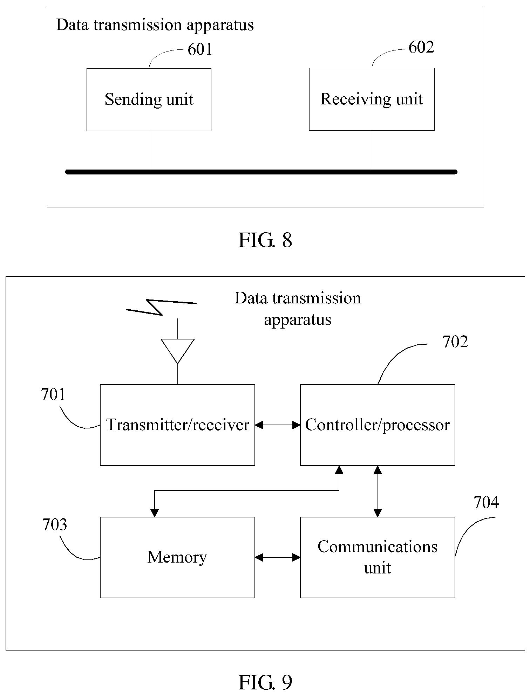

FIG. 8 is a schematic structural diagram of a data transmission apparatus according to Embodiment 3 of the present invention. The apparatus shown in FIG. 8 is deployed in a first transmission node, and is configured to perform the data transmission method performed by the first transmission node in Embodiment 3. The following describes a main function of the data transmission apparatus, and for a part not described herein, refer to Embodiment 3 and the accompanying drawing corresponding to Embodiment 3.

The data transmission apparatus shown in FIG. 8 includes a sending unit 601 and a receiving unit 602, where
the sending unit 601 is configured to send a first parameter to user equipment, so that the user equipment determines a second parameter based on the first parameter, where the second parameter includes a channel coding scheme and/or a transmission waveform; and
the receiving unit 602 is configured to receive data that is transmitted by the user equipment based on the second parameter.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data includes at least one of the following:
a modulation and coding scheme MCS value of the data; and
a time-frequency resource used for transmission of the data.

In a possible design, the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

In a possible design, when the first parameter is common control information or control information of persistent scheduling, or the first parameter is signal quality of a link, and the signal quality of the link indicates that the user equipment is in a particular handover period or handover event, the first parameter indicates a predefined coding method.

In a possible design, when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

In a possible design, before the sending unit 601 sends the first parameter to the user equipment, the receiving unit 602 is further configured to:
receive request information that is used to obtain the first parameter and that is sent by the user equipment, where the request information includes explicit request information of the first parameter and/or implicit request information of the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

In a possible design, after the receiving unit 602 receives the request information that is used to obtain the first parameter and that is sent by the user equipment, the sending unit 601 is further configured to send response information of the first parameter to the user equipment, where the response information of the first parameter indicates a specific value of the second parameter used by the user equipment.

FIG. 9 is a schematic structural diagram of a data transmission apparatus according to Embodiment 4 of the present invention. The apparatus shown in FIG. 9 may be used as a first transmission node. The first transmission node may be UE, or may be a network device such as a base station or an AP. The apparatus shown in FIG. 9 is configured to perform the data transmission method performed by the first transmission node in Embodiment 3. The following describes a main function of the data transmission apparatus, and for a part not described herein, refer to Embodiment 3, and the accompanying drawing corresponding to Embodiment 3.

As shown in FIG. 9, the apparatus includes a transmitter/receiver 701, a controller/processor 702, a memory 703, and a communications unit 704. The transmitter/receiver 701 is configured to: support sending and receiving functions of the data transmission apparatus and the first transmission node in the foregoing embodiment, and support radio communication with other UE. The controller/processor 702 performs various functions used to communicate with the UE. On an uplink, a signal from the uplink of the UE is received by using an antenna, demodulated by the receiver 701, and further processed by the controller/processor 172 to restore service data and signaling information that are sent by the UE. On a downlink, service data and a signaling message are processed by the controller/processor 702, and demodulated by the transmitter 701 to generate a downlink signal, and the downlink signal is transmitted to the UE by using an antenna. In the solution of this embodiment of the present invention, the controller/processor 702 controls the transmitter/receiver 701 to perform functions including:
sending a first parameter to user equipment, so that the user equipment determines a second parameter based on the first parameter, where the second parameter includes a channel coding scheme and/or a transmission waveform; and
receiving data that is transmitted by the user equipment based on the second parameter.

In a possible design, the first parameter includes one or more of the following:
information directly indicating the second parameter;
format information of control information of the data;
scheduling information of the data;
feedback information used for transmission of the data; and
a system parameter used for transmission of the data.

In a possible design, the first parameter includes one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

In a possible design, at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data includes at least one of the following:
a modulation and coding scheme MCS value of the data; and
a time-frequency resource used for transmission of the data.

In a possible design, the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

In a possible design, when the first parameter is common control information or control information of persistent scheduling, or when the first parameter is signal quality of a link, and the signal quality of the link indicates that the user equipment is in a particular handover period or handover event, the first parameter indicates a predefined coding method.

In a possible design, when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

In a possible design, before the transmitter/receiver 701 sends the first parameter to the user equipment, the transmitter/receiver 701 is further configured to:
receive request information that is used to obtain the first parameter and that is sent by the user equipment, where the request information includes explicit request information of the first parameter and/or implicit request information of the first parameter.

In a possible design, the implicit request information of the first parameter includes one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

In a possible design, after the transmitter/receiver 701 receives the request information that is used to obtain the first parameter and that is sent by the user equipment, the transmitter/receiver 701 is further configured to send response information of the first parameter to the user equipment, where the response information of the first parameter indicates a specific value of the second parameter used by the user equipment.

Further, the memory 703 is configured to store program code and data of the data transmission apparatus. The communications unit 704 is configured to support communication between the data transmission apparatus and another network entity. For example, the communications unit 704 is configured to support communication between the data transmission apparatus and UE and another communications network entity, for example, an MME, an SGW, and/or a PGW in a core network EPC.

It may be understood that FIG. 9 shows only a simplified design of the data transmission apparatus. In actual application, the data transmission apparatus may include any quantity of transmitters, receivers, processors, controllers, memories, communications units, and the like. All data transmission apparatuses capable of implementing the present invention fall within the protection scope of the present invention.

It may be understood that the processor in the embodiments of the present invention may be a central processing unit (CPU), a general processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in the present invention. Alternatively, the processor may be a combination implementing a computing function, for example, a combination of one or more microprocessors, or a combination of a DSP and a microprocessor.

A person skilled in the art may clearly understand that mutual reference may be made to descriptions of the embodiments provided in the present invention. For ease and brevity of description, for example, for functions of and steps performed by the apparatuses and the devices provided in the embodiments of the present invention, refer to related description of the method embodiments of the present invention.

Method or algorithm steps described with reference to the content disclosed in the present invention may be implemented by hardware, or may be implemented by a processor by executing a software instruction. The software instruction may be formed by a corresponding software module. The software module may be stored in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

In the several embodiments provided in this application, it should be understood that the disclosed system, device, and method may be implemented in other manners within the scope of this application. For example, the described embodiment is merely an example. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts. In addition, the schematic diagrams illustrating the system, device, method, and different embodiments may be combined or integrated with other systems, modules, technologies, or methods without departing from the scope of this application. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
obtaining, by user equipment, a first parameter;
determining a second parameter based on the first parameter, wherein the second parameter comprises a channel coding scheme and/or a transmission waveform; and
transmitting data by using the second parameter.

2. The method according to claim 1, wherein the channel coding scheme comprises:
a low-density check code; and
a channel coding scheme other than the low-density check code.

3. The method according to claim 1 or 2, wherein the transmission waveform comprises one of the following:
an orthogonal frequency division multiplexing OFDM waveform; and
a discrete Fourier transform DFT-spread-orthogonal frequency division multiplexing OFDM waveform.

4. The method according to any one of claims 1 to 3, wherein the first parameter comprises one or more of the following:
information directly indicating the second parameter;
format information of control information of the data;
scheduling information of the data;
feedback information used for transmission of the data; and
a system parameter used for transmission of the data.

5. The method according to any one of claims 1 to 3, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

6. The method according to any one of claims 1 to 5, wherein the determining a second parameter based on the first parameter comprises:
determining a specific scheme of the channel coding in the second parameter and/or a specific scheme of the transmission waveform in the second parameter based on a value of the first parameter or a status of the first parameter, wherein
the value of the first parameter or the status of the first parameter is associated with one or more specific schemes of the channel coding and/or specific schemes of the transmission waveform.

7. The method according to claim 4, wherein the determining a second parameter based on the first parameter comprises: determining a size of a transmitted data packet based on the scheduling information of the data, wherein the scheduling information of the data comprises at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

8. The method according to claim 4, wherein the scheduling information of transmission of the data is an MCS configuration of the data; and
the determining a second parameter based on the first parameter comprises:
when the MSC configuration indicates a type or an index of an MCS table used during transmission of the data, determining, by the user equipment, the channel coding scheme in the second parameter based on the type or the index value of the MCS table; or
when the MSC configuration indicates an MCS value used during transmission of the data, determining, by the user equipment, the channel coding scheme in the second parameter based on the MCS value and a predefined MCS table.

9. The method according to any one of claims 1 to 3, wherein the determining a second parameter based on the first parameter comprises:
when the first parameter indicates that the user equipment detects only common control information or control information of persistent scheduling, or when the first parameter is signal quality of a link, and the signal quality of the link indicates that the user equipment is in a particular handover period or handover event, determining, by the user equipment, the second parameter in a predefined manner.

10. The method according to any one of claims 1 to 3, wherein the determining a second parameter based on the first parameter comprises:
when the first parameter indicates that the user equipment transmits the data in a grant free manner, determining, by the user equipment, the second parameter based on at least one of the following parameters:
a size of a data packet;
a channel state value;
a resource used during transmission of the data in the grant free manner; and
a default or predefined manner.

11. The method according to any one of claims 1 to 10, wherein before the obtaining, by user equipment, a first parameter, the method further comprises:
sending, by the user equipment, request information used to obtain the first parameter, wherein the request information comprises explicit request information of the first parameter and/or implicit request information of the first parameter.

12. The method according to claim 11, wherein the sending, by the user equipment, request information used to obtain the first parameter comprises:
when a transmission parameter of the user equipment changes, sending, by the user equipment, the request information used to obtain the first parameter.

13. The method according to claim 11 or 12, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

14. A data transmission method, comprising:
sending, by a first transmission node, a first parameter to user equipment, so that the user equipment determines a second parameter based on the first parameter, wherein the second parameter comprises a channel coding scheme and/or a transmission waveform; and
receiving, by the first transmission node, data that is transmitted by the user equipment based on the second parameter.

15. The method according to claim 14, wherein the first parameter comprises one or more of the following:
information directly indicating the second parameter;
format information of control information of the data;
scheduling information of the data;
feedback information used for transmission of the data; and
a system parameter used for transmission of the data.

16. The method according to claim 14, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

17. The method according to claim 15, wherein at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data comprises at least one of the following:
a modulation and coding scheme MCS value of the data; and
a time-frequency resource used for transmission of the data.

18. The method according to claim 15, wherein the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

19. The method according to claim 14, wherein when the first parameter is common control information or control information of persistent scheduling, or when the first parameter is signal quality of a link, and the signal quality of the link indicates that the user equipment is in a particular handover period or handover event, the first parameter indicates a predefined coding method.

20. The method according to claim 14, wherein when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

21. The method according to any one of claims 14 to 20, wherein before the sending, by a first transmission node, a first parameter to user equipment, the method further comprises:
receiving, by the first transmission node, request information that is used to obtain the first parameter and that is sent by the user equipment, wherein the request information comprises explicit request information of the first parameter and/or implicit request information of the first parameter.

22. The method according to claim 21, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

23. The method according to claim 21 or 22, wherein after the receiving, by the first transmission node, request information that is used to obtain the first parameter and that is sent by the user equipment, the method further comprises:
sending, by the first transmission node, response information of the first parameter to the user equipment, wherein the response information of the first parameter indicates a specific value of the second parameter used by the user equipment.

24. A data transmission apparatus, wherein the apparatus is deployed in user equipment, and comprises:
an obtaining unit, configured to obtain a first parameter;
a determining unit, configured to determine a second parameter based on the first parameter, wherein the second parameter comprises a channel coding scheme and/or a transmission waveform; and
a transmission unit, configured to transmit data by using the second parameter.

25. The apparatus according to claim 24, wherein the channel coding scheme comprises:
a low-density check code; and
a channel coding scheme other than the low-density check code.

26. The apparatus according to claim 24 or 25, wherein the transmission waveform comprises one of the following:
an orthogonal frequency division multiplexing OFDM waveform; and
a discrete Fourier transform DFT-spread-orthogonal frequency division multiplexing OFDM waveform.

27. The apparatus according to any one of claims 24 to 26, wherein the first parameter comprises one or more of the following:
information directly indicating the second parameter;
format information of control information of the data;
scheduling information of the data;
feedback information used for transmission of the data; and
a system parameter used for transmission of the data.

28. The apparatus according to any one of claims 24 to 26, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

29. The apparatus according to any one of claims 24 to 28, wherein that the determining unit determines the second parameter based on the first parameter specifically comprises:
determining a specific scheme of the channel coding in the second parameter and/or a specific scheme of the transmission waveform in the second parameter based on a value of the first parameter or a status of the first parameter, wherein
the value of the first parameter or the status of the first parameter is associated with one or more specific schemes of the channel coding and/or specific schemes of the transmission waveform.

30. The apparatus according to claim 27, wherein that the determining unit determines the second parameter based on the first parameter specifically comprises:
determining a size of a transmitted data packet based on the scheduling information of the data, wherein the scheduling information of the data comprises at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

31. The apparatus according to claim 27, wherein the scheduling information of transmission of the data is an MCS configuration of the data; and
that the determining unit determines the second parameter based on the first parameter specifically comprises:
when the MSC configuration indicates a type or an index of an MCS table used during transmission of the data, determining the channel coding scheme in the second parameter based on the type or the index value of the MCS table; or
when the MSC configuration indicates an MCS value used during transmission of the data, determining the channel coding scheme in the second parameter based on the MCS value and a predefined MCS table.

32. The apparatus according to any one of claims 24 to 26, wherein that the determining unit determines the second parameter based on the first parameter specifically comprises:
when the first parameter indicates that the user equipment detects only common control information or control information of persistent scheduling, or when the first parameter is signal quality of a link, and the signal quality of the link indicates that the user equipment is in a particular handover period or handover event, determining, by the determining unit, the second parameter in a predefined manner.

33. The apparatus according to any one of claims 24 to 26, wherein that the determining unit determines the second parameter based on the first parameter specifically comprises:
when the first parameter indicates that the user equipment transmits the data in a grant free manner, determining, by the determining unit, the second parameter based on at least one of the following parameters:
a size of a data packet;
a channel state value;
a resource used during transmission of the data in the grant free manner; and
a default or predefined manner.

34. The apparatus according to any one of claims 24 to 33, wherein the apparatus further comprises a sending unit, wherein
the sending unit is configured to: before the obtaining unit obtains the first parameter, send request information used to obtain the first parameter, wherein the request information comprises explicit request information of the first parameter and/or implicit request information of the first parameter.

35. The apparatus according to claim 34, wherein that the sending unit sends the request information used to obtain the first parameter specifically comprises:
when a transmission parameter of the user equipment changes, sending, by the sending unit, the request information used to obtain the first parameter.

36. The apparatus according to claim 34 or 35, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

37. A data transmission apparatus, wherein the apparatus is deployed in a first transmission node, and comprises:
a sending unit, configured to send a first parameter to user equipment, so that the user equipment determines a second parameter based on the first parameter, wherein the second parameter comprises a channel coding scheme and/or a transmission waveform; and
a receiving unit, configured to receive data that is transmitted by the user equipment based on the second parameter.

38. The apparatus according to claim 37, wherein the first parameter comprises one or more of the following:
information directly indicating the second parameter;
format information of control information of the data;
scheduling information of the data;
feedback information used for transmission of the data; and
a system parameter used for transmission of the data.

39. The apparatus according to claim 37, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

40. The apparatus according to claim 38, wherein at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data comprises at least one of the following:
a modulation and coding scheme MCS value of the data; and
a time-frequency resource used for transmission of the data.

41. The apparatus according to claim 38, wherein the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

42. The apparatus according to claim 37, wherein when the first parameter is common control information or control information of persistent scheduling, or when the first parameter is signal quality of a link, and the signal quality of the link indicates that the user equipment is in a particular handover period or handover event, the first parameter indicates a predefined coding method.

43. The apparatus according to claim 37, wherein when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

44. The apparatus according to any one of claims 37 to 43, wherein before the sending unit sends the first parameter to the user equipment, the receiving unit is further configured to:
receive request information that is used to obtain the first parameter and that is sent by the user equipment, wherein the request information comprises explicit request information of the first parameter and/or implicit request information of the first parameter.

45. The apparatus according to claim 44, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

46. The apparatus according to claim 44 or 45, wherein after the receiving unit receives the request information that is used to obtain the first parameter and that is sent by the user equipment, the sending unit is further configured to send response information of the first parameter to the user equipment, wherein the response information of the first parameter indicates a specific value of the second parameter used by the user equipment.

47. A data transmission apparatus, wherein the apparatus is deployed in user equipment and comprises a processor, a memory, and a communications interface, and the processor, the memory, and the communications interface are connected by using a communications bus;
the processor is configured to read program code stored in the memory, to perform the following operations:
obtaining a first parameter;
determining a second parameter based on the first parameter, wherein the second parameter comprises a channel coding scheme and/or a transmission waveform; and
transmitting data by using the second parameter.

48. The apparatus according to claim 47, wherein the channel coding scheme comprises:
a low-density check code; and
a channel coding scheme other than the low-density check code.

49. The apparatus according to claim 47 or 48, wherein the transmission waveform comprises one of the following:
an orthogonal frequency division multiplexing OFDM waveform; and
a discrete Fourier transform DFT-spread-orthogonal frequency division multiplexing OFDM waveform.

50. The apparatus according to any one of claims 47 to 49, wherein the first parameter comprises one or more of the following:
information directly indicating the second parameter;
format information of control information of the data;
scheduling information of the data;
feedback information used for transmission of the data; and
a system parameter used for transmission of the data.

51. The apparatus according to any one of claims 47 to 49, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

52. The apparatus according to any one of claims 47 to 51, wherein that the processor determines the second parameter based on the first parameter specifically comprises:
determining a specific scheme of the channel coding in the second parameter and/or a specific scheme of the transmission waveform in the second parameter based on a value of the first parameter or a status of the first parameter, wherein
the value of the first parameter or the status of the first parameter is associated with one or more specific schemes of the channel coding and/or specific schemes of the transmission waveform.

53. The apparatus according to claim 50, wherein that the processor determines the second parameter based on the first parameter specifically comprises:
determining a size of a transmitted data packet based on the scheduling information of the data, wherein the scheduling information of the data comprises at least one of the following:
a modulation and coding scheme MCS value of the data; and
a time-frequency resource used for transmission of the data; and
determining the channel coding scheme in the second parameter based on the size of the data packet by using a preset threshold of each channel coding scheme associated with the size of the data packet.

54. The apparatus according to claim 50, wherein the scheduling information of transmission of the data is an MCS configuration of the data; and
that the processor determines the second parameter based on the first parameter specifically comprises:
when the MSC configuration indicates a type or an index of an MCS table used during transmission of the data, determining the channel coding scheme in the second parameter based on the type or the index value of the MCS table; or
when the MSC configuration indicates an MCS value used during transmission of the data, determining the channel coding scheme in the second parameter based on the MCS value and a predefined MCS table.

55. The apparatus according to any one of claims 47 to 49, wherein that the processor determines the second parameter based on the first parameter specifically comprises:
when the first parameter indicates that the user equipment detects only common control information or control information of persistent scheduling, or when the first parameter is signal quality of a link, and the signal quality of the link indicates that the user equipment is in a particular handover period or handover event, determining, by the determining unit, the second parameter in a predefined manner.

56. The apparatus according to any one of claims 47 to 49, wherein that the processor determines the second parameter based on the first parameter specifically comprises:
when the first parameter indicates that the user equipment transmits the data in a grant free manner, determining, by the determining unit, the second parameter based on at least one of the following parameters:
a size of a data packet;
a channel state value;
a resource used during transmission of the data in the grant free manner; and
a default or predefined manner.

57. The apparatus according to any one of claims 47 to 56, wherein the processor is further configured to: before the obtaining unit obtains the first parameter, control the communications interface to send request information used to obtain the first parameter, wherein the request information comprises explicit request information of the first parameter and/or implicit request information of the first parameter.

58. The apparatus according to claim 57, wherein that the processor controls the communications interface to send the request information used to obtain the first parameter specifically comprises:
when a transmission parameter of the user equipment changes, controlling, by the processor, the communications interface to send the request information used to obtain the first parameter.

59. The apparatus according to claim 57 or 58, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

60. A data transmission apparatus, wherein the apparatus is deployed in a first transmission node, and comprises:
a transmitter, configured to send a first parameter to user equipment, so that the user equipment determines a second parameter based on the first parameter, wherein the second parameter comprises a channel coding scheme and/or a transmission waveform; and
a receiver, configured to receive data that is transmitted by the user equipment based on the second parameter.

61. The apparatus according to claim 60, wherein the first parameter comprises one or more of the following:
information directly indicating the second parameter;
format information of control information of the data;
scheduling information of the data;
feedback information used for transmission of the data; and
a system parameter used for transmission of the data.

62. The apparatus according to claim 60, wherein the first parameter comprises one or more of the following:
a resource selection mode used during transmission of the data;
a resource identifier used during transmission of the data;
a resource type used during transmission of the data;
a synchronization source type used during transmission of the data; and
a moving speed of the user equipment during transmission of the data.

63. The apparatus according to claim 61, wherein at least one of the following information of the scheduling information of the data is used by the user equipment to determine a size of a transmitted data packet, so that the user equipment determines the channel coding scheme in the second parameter based on the size of the data packet by using a preset threshold of each channel coding scheme associated with the size of the data packet; and
the scheduling information of the data comprises at least one of the following:
a modulation and coding scheme MCS value of the data; and
a time-frequency resource used for transmission of the data.

64. The apparatus according to claim 61, wherein the scheduling information of transmission of the data is an MCS configuration; and
the MSC configuration indicates a type or an index of an MCS table used during transmission of the data, so that the user equipment determines the channel coding scheme in the second parameter based on the type or the index value of the MCS table; or
the MSC configuration indicates an MCS value used during transmission of the data, so that the user equipment determines the channel coding scheme in the second parameter based on the MCS value and a predefined MCS table.

65. The apparatus according to claim 60, wherein when the first parameter is common control information or control information of persistent scheduling, or when the first parameter is signal quality of a link, and the signal quality of the link indicates that the user equipment is in a particular handover period or handover event, the first parameter indicates a predefined coding method.

66. The apparatus according to claim 60, wherein when the first parameter indicates that the user equipment transmits the data in a grant free manner, the first parameter is used to indicate that the user equipment determines the second parameter based on at least one of the following parameters:
a size of a data packet;
a channel state value;
a resource used during transmission of the data in the grant free manner; and
a default or predefined manner.

67. The apparatus according to any one of claims 60 to 66, wherein before the transmitter sends the first parameter to the user equipment, the receiver is further configured to:
receive request information that is used to obtain the first parameter and that is sent by the user equipment, wherein the request information comprises explicit request information of the first parameter and/or implicit request information of the first parameter.

68. The apparatus according to claim 67, wherein the implicit request information of the first parameter comprises one or more of the following:
scheduling request information;
a buffer status report;
channel state information;
a power headroom report;
a hybrid automatic repeat request HARQ acknowledgement message;
beam indication information; and
a type or parameter of an uplink reference signal sequence.

69. The apparatus according to claim 67 or 68, wherein after the receiver receives the request information that is used to obtain the first parameter and that is sent by the user equipment, the transmitter is further configured to send response information of the first parameter to the user equipment, and the response information of the first parameter indicates a specific value of the second parameter used by the user equipment.
